# EUROPEAN PATENT SPECIFICATION

(11) **EP 3 839 426 B1**
(45) Date of publication and mention of the grant of the patent: **08.02.2023**
(21) Application number: 19218286.3
(22) Date of filing: 19.12.2019
(51) Int. Cl.: G01C 9/32, G01C 9/36, G01C 15/00, G01C 9/06, G01C 25/00, G01C 9/18

(54) **LEVELING SENSOR**
NIVELLIERSENSOR
CAPTEUR DE MISE À NIVEAU

(43) Date of publication of application: 23.06.2021
(73) Proprietor: Hexagon Technology Center GmbH, 9435 Heerbrugg (CH)
(72) Inventor: WENK, Markus, CH-7000 Chur (CH); ZEH, Jochen, D-88239 Wangen bei Allgäu (DE); SPRECHER, Markus, CH-9472 Grabserberg (CH); AMANN, Werner, AT-6800 Feldkirch (AT)
(74) Representative: Kaminski Harmann

(56) References cited:
- JP-A- 2000 055 655
- US-B1- 6 993 849

## Description

The invention relates to a capacitive measuring tilt sensor according to the preamble of claim 1 and to a corresponding method as well as a surveying instrument comprising such.

The invention relates to an inclination sensor for deriving an orientation information with respect to level or plumb direction. Specifically, the present invention relates a deriving of level, plumb- or gravitational direction information according to a principle similar to the one used in spirit levels or bubble levels. In a preferred embodiment, the present invention is configured to derive horizontal in two dimensions, similar to a bulls-eye level. Nevertheless, the concept of the present invention can also be applied to single axis levels similar to tubular spirit levels.

It is known in the art to read out bubble levels by electronic means. An obvious and often used approach is therein to read out the bubbles location by optical means to evaluate a level information, like optoelectronic bubble sensors, an optoelectronic oil pot or an optoelectronic circular bubble. Examples can e.g. be found in GB 1 425 812, EP 2 342 534, AT 80 127, EP 2 423 640, DE 10 2008 053 754, DE 11 2007 000 198, or others.

Another option for readout is by magnetic and/or capacitive sensor arrangements, e.g. as proposed in GB 2 304 418, GB 2 304 418, DE 10 007 246, DE 10 007 246, EP 0 492 330, EP 0 546 822, EP 0 492 330, EP 0 546 822, DE 10 2005 025908, US 5 180 986, US 4 422 243, US 6 993 849, US 4 660 290, DE 10 2008 025 236 or WO 2009/019 004.

Such inclination sensors of high precision - e.g. with a sensitivity in a range of 1 to 30 angular seconds or below, like about or below 0.005 degree - are for example -but not only- used in the technical field of surveying. In particular, in the area of geodesy, construction work or industrial measurements, metrology instruments for a contactless measurement by a movable optical measurement axis, e.g. like a theodolite, total station, laser level, rotary laser, laser scanner, laser tracker, etc. are examples of applications.

A problem therein is to provide accurate and stable tilt measurement values when the instrument comprising the sensor is moved around or initially positioned, also under varying environmental conditions like temperature, etc. Although a measurement calibration of zero can be achieved relatively simple for some instrument by comparing sensor readings rotated through 180 degrees in the horizontal plane, other instruments have no mechanism to rotate the sensor by 180°, or still other effects and issues remain, for example drifts of the sensor readouts or temperature dependencies. A disadvantage of highly accurate level-sensors such as e.g. oil pot sensors, is also their limited measurement range, wherefore a quite exact physical leveling of an instrument (e.g. by a tribrach and an ordinary spirit level) is required at first hand to bring the actual level sensor into its working range. While improving accuracy and reliability, the sensor is preferably also to be kept simple in design and production, preferably using standard and well established manufacturing processes.

For example, when setting up or stationing a measurement instrument comprising such a tilt sensor, the instrument can be taken out of its box, chest or case and fixed to the top of a tripod or the like. Such can involve a tipping of the instrument for erecting, often of up to about 90° from its orientation in its case during transportation or unboxing to its erected orientation on the tripod. A liquid-bubble based tilt sensor then requires some time to accommodate to such a rather abrupt change, which manifest in kind of a drift of the tilt measurement values until an equilibrium is reached. For precise tilt measurements, this can take several minutes up to half an hour or more. Such waiting can sometimes be avoided by deriving a final exact tilt measurement of the instrument not at the beginning of the measurement, but to postpone such to a later stage by first doing some measurements while the sensor is settling and then afterwards correct the previously derived measurements to a final, stable tilt value at a later time after the drift has settled - however such is often not practical or desirable in many applications.

It is therefore an object to improve an inclination sensor, in particular in measurement precision and reliability. It is a particular object to reduce drift and settling effects in order to reduce the time required for a valid and accurate sensor readout.

Those objects should in particular be achieved without great effort and suitable for mass production and/or without excessive hardware calibration and adjustment effort in the manufacturing process for each individual sensor produced - also in view of unavoidable manufacturing tolerances.

Those objects are achieved by realizing the features of the independent claims. Features which further develop the invention in an alternative or advantageous manner are described in the dependent patent claims.

The invention relates to a capacitive measuring tilt sensor configured for measuring two axis level information, in particular, to a capacitive evaluated circular bubble level or bulls-eye. The tilt sensor comprises a cavity, which cavity comprises a fluid and a bubble of a gas (or a bubble of a liquid of different density that is non-mixing with the fluid and) of different relative dielectricity than the fluid. The cavity is configured with an electrically conducting or conductively plated dome as a first dome electrode, and a base (e.g. a base plate or floor slab) with at least three, preferably four or optionally also more, bottom or base electrodes, as proposed in JP 2000 055655 A. The bubble can therein be configured to occupy a substantial volume of the cavity, for example in a range of about 30% to 70%, in particular about 50% or more, of the volume of the cavity. The cavity and the bubble are configured in such a way, that the bubble touches the dome and also the base at the same time. As one example of possible embodiments, such a configuration can be described to result from a height of the dome which configured to be lower than twice the capillarity length of the fluid. For example, when substantially in level orientation, bubble and the top of the dome as well as the bubble and the base touch each other over a non-zero surface area - whereby the bubble will regularly also touch the dome and the bottom at other tilt angles than level.

A capacitance measuring unit or circuitry is provided and configured to determine electrical capacitances between the electrodes, in particular in between the first electrode at the dome and the bottom electrodes. An evaluation unit or circuitry is provided and configured to derive or calculate a tilt information with respect to level on basis of the electrical capacitances. The derived tilt information can then e.g. be provided to a surveying instrument for referencing surveying measurements to the tilt information and providing those referenced measurements.

The base of a sensor according to the invention is configured as an electronic PCB, for example a glass-fiber/epoxy composite PCB like a FR4-, CEM4-, CEM5-, RF35-PCB, etc. but optionally also a Glass-, Ceramic-, PTFE- or MEGTRON-PCB, comprising circuit tracks and isolating base material. The bottom electrodes are therein formed by the circuit tracks of the PCB under the dome. The PCB is therein preferably a multilayered PCB comprising at least one inner layer of conducting tracks which is enclosed by insulation PCB-material at both sides. The PCB preferably also comprises the capacitance measuring unit and optionally also at least part of the evaluation unit, e.g. being configured to be populated with electronic components for those functions.

As explained above, if a known sensor - and therewith the fluid in the cavity - is moved fast or jerky, the sensor readings suffer from a rather long term drift until a final, stable and accurate tilt reading can be taken from the sensor, in particular if the accuracy requirements of the tilt readings are high. It is apparent how this and why occurs and what is happening, but it can hinder a usage of such sensors in high precession applications.

Established designs are configured such that the bubble floats at the top of the dome and is only touching the cavity surface at the top of the dome - at least when in an operational measurement orientation in which it is intended to be used. In particular around level orientation, but regular also in tiled orientation, the bubble of the prior art sensor does not touch the bottom of the cavity under the dome - expect maybe in extreme sensor orientations like upside-down, tilted 90° or tilted 45° or the like, which are outside the specified operational range of the sensor in which accurate level information can be derived.

According to the invention, the cavity and the fluid are configured in such a way, that the bubble touches a top of the dome and the base. Or in other words, according to the invention, the cavity and its filling are configured in such a way that the bubble substantially always touches the bottom under the dome, in particular when in an operational orientation, in particular when at least substantially in level orientation. For example, such can be configured with a dome-height that is comparably low relative to the cavity diameter. As a rule of thumb, the cavity height can e.g. be in a range of twice the capillarity length of the fluid or less. Also, the filling factor of the cavity should not be too high, e.g. at least less than about 70% of the cavity should be filled with fluid, preferably e.g. roughly about 50% of the cavity or even less should be filled with the fluid. The arching of the cavity is therein preferably relatively flat, e.g. with a gradient at outer circumference of less than 30 degree and/or with a maximal cavity height below about 30% or below 10% of the cavity diameter. In a cavity configured according to the invention and with the fluid inside, a bubble will form inside the cavity, which bubble is touching both the top and the bottom of the cavity, whereby a preferable sensitivity of the capacity measurement as well as preferable drift behavior can be established. The term touching in the present context does therein not necessitate a direct contact of the gas of the bubble with the inside surface of the cavity, but there can be a thin film of fluid in-between. In an example of an embodiment, in a cross section view in level orientation of the sensor a height of the bubble is at least greater than a height of an underlying fluid film at the bottom, in particular at least less than 50% or less than 20% of the bubble height, preferably at most a few percent of the bubble height. In particular in an embodiment according to the invention, there is in fact preferably always an at least thin film of fluid at preferably substantially the whole inner surface of the cavity, in particular at a layer at the inside of the bottom and/or the dome of the cavity.

The fluid that can be used according to the invention can also be characterized by its capillary length, in particular as a high capillary length influences a forming of a shape of the bubble in the cavity, which bubble is sandwiched or wedged-in between the top of the dome and the bottom, such that the bubble touches both of them simultaneously - also in level-orientation of the sensor - which is advantageous in a sensor according to the invention for reducing drift effects.

According to the invention, at least the bottom electrodes are covered by a layer in-between the electrodes and the fluid (or the bubble), which separates the electrodes from the fluid. The layer provides a surface to the fluid which results in a different flow of the fluid on the layer, e.g. with an optimized contact angle of the fluid. The layer is configured to be wetted by the fluid.

It turns out that after the sensor is moved fast or jerky, or at high velocity (in particular moved with a speed above the natural mobility of the fluid on the surface), the fluid - bubble separation can get distorted, e.g. by small portions of the fluid and/or bubbles getting separated from the rest. Without specific measures, it can then take quite a long time for the fluid to flow back to a final, stable separation, forming a single bubble and a single fluid volume. In particular in such a way, that a final, tilt dependent shape and position of a bubble-liquid interface in the cavity is established, for example with potential fluid-drops or fluid-waves reunited with the rest of the fluid and/or potential separated micro-bubbles of the bubble reunited with the bubble. Such can result in a drift of the sensor readings after fast sensor-movements, as the sensor principle relies on a defined fluid-bubble separation.

The present invention reduces such drifts, wherefore, not only the fluid parameters are of importance, but according to the invention also the inner of the cavity is to be configured accordingly by the specific layer according to the invention. The invention therefore proposes the layer with a specific surface at the electrodes, that is configured to hinder that small portions of the fluid and/or bubbles getting stuck to the surface and thereby separated from the rest.

The present invention can therein specifically be embodied with a layer that is not necessarily maximally smooth with minimal roughness of the surface, but which is configured as a kind of spongy-like layer that can absorb or been soaked by the fluid. The layer according to the invention can therein be relatively thin, e.g. below 0.2mm or below 0.1mm or even less down to a microscopic level, as the spongy like soaking has preferably to be a surface-property of the layer, not going into depth. Such a sponge like coating layer can structured or textured at a microscopic surface scale, but preferably not squishy or soft and also not required to be pervious for the fluid but more kind of a superficial porous surface structure as a kind of microscopic surface roughness.

For example, a layer of FR4-material of the PCB over the electrodes as a comparably rough layer with a surface structure can be an embodiment of the present invention, which improves the fluid flow time in the sensor, in particular with a fluid configured as a silicone oil.

In an embodiment, the layer can further be configured with a substantially flat surface towards the dome. Such can for example be established with a continuous surface of an electrical isolation layer of the PCB under the dome with the bottom electrodes formed by the circuit tracks underneath that (top-) isolation layer. For example, an outer conductor layer underneath the dome is free of tracks and a top isolation layer of the PCB is exposed as base plate under the dome - or in other words, said isolation layer is an outermost top isolation layer of the PCB under the dome, which covers the bottom electrodes. The layer can e.g. be formed as a glass-fiber/epoxy material surface at the inside of the cavity that is exposed to the fluid.

In another embodiment, the layer can be made of a sheet of glass that is applied atop of the PCB, underneath the dome.

The base under the dome can therein also be covered by a kind of spongy, porous or textured material, which forms the layer, and which can in particular be configured to be covered by a thin film of the fluid - not necessarily an optimally flat and smooth surface as one would expect.

The surface of the layer is therein not configured to be highly polished and totally flat down to a microscopic scale, or in other words not highly smooth or blank, but to provide some structure or texture. For example, an embodiment can use a layer of black chromium applied to the electrodes ("schwarzverchromt"), at least to the bottom electrodes 12, preferably also to the dome arching 23. This black chromium layer can e.g. be applied electrolytically, vapor-deposited, sputtered or the like. The surface of the black chromium can therein provide a microscopic surface structure that is well moisturized by e.g. silicone oil of low viscosity as rheological property of the fluid. The basis for such a black chromium surface layer can be the pure copper of the PCB or a nickel plating or the like. As black chromium is well electrically conducting, the surface of the black chromium also forms the electrode, which is in direct contact to the fluid, which can be advantageous for a measurement of the capacitance, e.g. due to higher capacitance and therefore also higher sensitivity. As black chromium is conductive, it must be spaced and/or isolated between the electrodes.

In such a configuration, the fluid can form a at least monomolecular fluid film that covers the layer.

Such a film can e.g. prevent micro gas bubbles as portions of the gas bubble in the cavity to stick to the surface of the layer and/or such can e.g. prevent a rupture of the fluid film, by which portions of the fluid in the cavity can get separated from the rest of the fluid, e.g. getting stuck to the surface as kind of a singular drop or e.g. by a kind of a wave of fluid which trails the fast movement of the main fluid and takes some time to abate and unite to a final equilibrium. In particular, after a harsh movement of the sensor - and an accordingly fast movement of the fluid and bubble within the sensor - above can potentially disrupt the singular bubble versus fluid separation into multiple, in particular microscopic, portions that have to gather to a single bubble /single fluid portion over time, in order to get an exact tilt measurement.

The bottom electrodes at the base can therein preferably be covered by a substantially plane layer. For example, wherein top of the base plate is configured as a continuous and/or uninterrupted plane, which is formed by an electrically non-conductive layer of the PCB material. This means the non-conductive layer is arranged in-between the electrodes and the fluid cavity, preferably wherein the base plate is configured with a fully uninterrupted plain providing a planar surface towards the inner dome.

An arching of the dome can therein be configured with a non-constant, varying curvature, e.g. according to a polynomial function, for example configured in such a way that the dome is substantially fading to zero height at its fringe or border and/or providing rounded corners at the fringe or border to provide a cavity with substantially no sharp edges. In an embodiment, the dome can be shaped piecewise circular or piecewise polynomial, in particular the arching shape of the dome is configured in such a way that a sensitivity of the sensor is dependent on the actual tilt angle of the sensor. For example, the dome can be shaped comparably flat in the center of the dome to achieve higher tilt measurement accuracies in a range about e.g. +/- 2 degree around level but having a thereto decreasing tilt measurement accuracy for tilts above 2 degrees, for example with a decrease of measurement accuracy for angles from about 2° to about 17° (or another specified maximal operational range), wherein a configuration with a substantially linear decrease can be preferred in some applications.

Such an embodiment can comprise a dome configuration with a low, preferably substantially zero, height at its circumference. For example, with a dome arching curvature configured to fade to substantially zero height at an angle substantially less than 90° (e.g. less than 60° or less than 45°) with respect to the base. In particular, as this dome configuration with a rather flat fading to zero at the circumference is also advantageous in reducing the drift time upon a sudden change of the sensor orientation. It can also bring advantages in view of increasing a desired valid sensitivity range to larger tilt angles without suffering from nonlinearity and/or hysteresis effects.

The dome can be a metallic dome, e.g. a dome shaped metal sheet or a solid block of metal that comprises a dome shaped cavity, or the dome can be primarily of an electrically non-conductive material and provided with a conductive sheet or layer as dome-electrode inside or at the inner face of the component. In an embodiment, the dome can be circumferentially soldered to the PCB, but in other embodiments it can also be fixed by glue, screws or clamping onto the PCB. The dome is preferably formed rotationally symmetrical around a central dome axis. Also the bottom electrodes at the PCB can optionally be configured rotationally symmetrical, preferably around substantially the same central dome axis when the dome is mounted.

For filling the fluid into the cavity during production of the tilt sensor, the PCB can comprise a through hole underneath the dome, preferably substantially at the central dome axis. The hole is configured to fill the fluid into the dome and to be closed afterwards, for example being closed by a plug, glue, soldering or laser welding.

In an embodiment according to the invention, the capacitances are derived as absolute values. Therein, in addition, the evaluation unit can be configured to derive or estimate a temperature value on basis of those absolute capacitance values in combination. For example, parameters, a mathematical estimator, a machine learned structure or neural network, or a lookup-table can be derived for the capacity readings of the tilt sensors, when the sensor is brought into defined tilt angles. Therein, the evaluation unit can be configured to derive the tilt information on basis of the capacitances with this temperature as a parameter to compensate for temperature dependent drifts of the derived tilt value. Doing such at calibration not only at multiple defined tilt angles but also at multiple defined temperatures can not only allow a compensation of temperature influences to the tilt measurements, but can be used to derive a temperature information from the capacity readings.

In an embodiment, the evaluation unit can be configured to command a moving of the tilt sensor in advance of the deriving of the tilt information. The moving can be a tilting moving and/or a vibrating moving. For example, the tilting moving can be executed in one or two axes, with a tilting angle of about 5-10°, at a slow speed, e.g. over a time of several seconds. The moving can therein be commanded to a drive unit of an instrument to which the tilt sensor is applied to. This moving can in addition reduce a time of drift until a stable tilt reading has settled. For example, this initial moving is initiated at startup, e.g. after the instrument including the tilt sensor has been manually moved, or after the sensor had been rotated very quickly. Once the instrument is setup and the initial moving is done, measurements can be taken at any time, at least as long as the instrument only moves with slow speed in between the measurements and/or the whole instrument is not moved or relocated.

The invention therefore also relates to a method of initializing a capacitive measuring tilt sensor according to claims 1-13 for reducing a drift-time of tilt readings from the sensor, until a drift of the sensor readings has decayed and an exact and stable tilt reading from the stationary sensor is derived. The method comprises a setting up or stationing of a surveying instrument comprising the capacitive measuring tilt sensor at a desired instrument location and orientation. Such stationing can involve harsh and/or rapid movements of the instrument.

According to the invention, after this stationing, the method comprises an inducing of a moving of portion of the instrument that comprises the capacitive measuring tilt sensor. Preferably, the moving can be a motorized moving by at least one motor of the instrument, which motor can preferably be a motor that is used to aim the instrument to a measurement target, which is induced by an electronic controller unit at the instrument - but can optionally also be a manual moving which is induced by a visual or acoustic indication for an operator to manipulate the instrument to execute the moving.

This moving is therein configured to pivot the gas-bubble in the cavity about the desired instrument orientation, in particular at a slow speed over several seconds. For example, the moving is a substantial tumbling motion, e.g. as a two axes angular tilt rotation as moving, like with a tilting of a rotation axis relative to the stationed orientation or relative to plumb-orientation - and to rotate the sensor around this tilted axis with a speed of at least a few seconds per rotation or slower. In an example of an embodiment, the moving can be induced with a tilt of with about 5 to 10 degrees over a time of a at least a few seconds. Thereby a drift-time of the sensor can be reduced substantially to the duration of the moving. Thereafter, the instrument can then be reverted to the desired instrument orientation and a deriving of the tilt readings can be done. This can be followed by a providing of the tilt readings to the instrument as measurement results and/or as level-reference for spatial measurements of objects that are taken by the instrument.

According to the invention, an inner surface of the fluid cavity is at least partially coated by a material, which material can in particular be a layer of a -phobic material or of a -philic material with respect to the fluid, at least at the base, optionally also at the dome. The terms hydrophobic and hydrophilic therein relates to the fluid in the cavity, which needs not to be water but some other fluid or mixture of fluids. For example, the coating material can be configured to provides a desired wetting angle of contact with the fluid.

The fluid can e.g. be a silicone oil, a fluorocarbon, a hydrocarbon or an aqueous solution which is substantially electrically non-conducting and configured with a relative dielectric constant or relative permittivity that is different from the bubble, for example in a range of about εᵣ ≈ 1.5 to 40. The capillarity or capillary length of the fluid (depending primarily on surface tension and density) can therein be considered as an important parameter of the fluid that defines the shape and position of the bubble in the cavity for a given tilt. Preferably, the fluid has a defined, preferably low, viscosity (for example of about 0.2cSt to 10cSt, or preferably less than 5cSt, like about 1cSt or below) - as lower viscosity generally tends to result in lower drift times and drift amplitudes. In particular, the parameters of surface tension and/or wetting angle of the pairing of the layer and the fluid of the sensor according to the invention is a parameter to be chosen, preferably in such a way that a wetting is established.

For example, a hydrophil fluid - layer combination, e.g. with a wetting angle close to zero can be used according to the present invention.

In an embodiment, an outer layer of the cavity can be metalized or the cavity itself can be formed of metal, which metallization or metal can be connected to a defined electrical potential, e.g. to an AC-signal of a capacity measurement. There can also be a shielding electrode configured as a layer of the PCB underneath the bottom electrodes and/or above the dome-electrode, which is connected to (preferably the same) the shielding potential. The invention also relates to a geodetic surveying instrument comprising a tilt sensor according to claims 1-13, for example a theodolite, a tachymeter, a total station, a laser scanner, a laser tracker, a rotary laser, a laser-liner, a laser marking unit, etc. The instrument can in particular comprise at least one, preferably two motorized movement axes, wherein the tilt sensor can be arranged to be moved by those axes with respect to an inertial frame of reference to establish the movement described above. In another embodiment the tilt sensor can be arranged at a base of the instrument that is configured to be stationed with respect to the inertial frame of reference.

In other words, the present invention provides a tilt sensor with an air- (or liquid-) bubble enclosed in a housing or cavity that is partially filled with a fluid, which bubble can move in two dimensions - similar to a circular bubble. In this sensor, the bubble is not detected optically, but capacitively. Therefore, an electrode is attached to the inside of a dome which is forming a top of the cavity. Multiple, e.g. four, electrodes are located on a bottom surface opposite the dome, which bottom comprises an electrical printed circuit board. Individual capacitances are measured between the dome and the bottom electrodes. A motion or change in position of the bubble at the top of the cavity due to tilt, causes a change in capacitance. As the spatial distribution of the fluid within the volume of the cavity changes, this also changes the distribution of the dielectric within the volume which can be detected as electrical capacity change in-between the electrodes. For example, the dome can be partially filled with a fluid with a dielectric constant different for air, so that a bubble of air is enclosed in it. In other embodiment, the bubble can also be of another gas or of different, non-mixing liquid, such as e.g. oil. Best sensitivity is given if the relative dielectric constant εᵣ of the fluid differs significantly from the relative dielectric constant of the bubble, so that the position of the bubble can be evaluated by means of capacitance measurements. The position in this sense is related to the spatial distribution of the fluid in the cavity, which can also be change of a shape of the bubble in the cavity, which can e.g. also be described by a shift of a center of gravity of the bubble or the like. In an embodiment with an air-bubble, having an εᵣ of around 1, the relative dielectricity of the fluid has to be substantially greater than 1, wherein an upper limit can be given as the resulting capacities must keep within range of the capacity sensing circuity (e.g. in an order of magnitude of about 4pF or the like). Also, higher εᵣ values of the fluid tend to result in a stronger dependency of the capacity from the temperature (which can nevertheless be calibrated and/or determined as discussed above).

In an embodiment, the sensor is designed so that the dome is made of a metallic material, e.g. copper or a copper alloy or another metal, preferably plated by some low corroding conductive material. In another embodiment, the sensor is designed so that the dome is made of a non-conductive material, e.g. a thermoset, a glass-fiber/epoxy-composite, etc.) with at least an inside of the dome coated with a conductive layer as dome-electrode, which can optionally also be again coated with an electrically conductive or insulating layer. The dome itself or the conductive layer forms one electrode for the capacitive measurement.

The bottom of the sensors cavity under the dome comprises or is configured as a printed circuit board (PCB) at which multiple opposite sensing electrodes are located underneath the dome, but conductively isolated from the dome.

According to the invention, the sensing electrodes are embodied as PCB-tracks, which tracks are separated from the cavity by a, preferably substantially flat, layer of non-conducting material, in particular by a planar layer, covering all of the sensing electrodes, in particular covering the whole of the bottom of the dome by a single, completely flat surface.

In a preferred embodiment, the PCB under the dome can be designed in such a way, that the PCBs surface under the dome is formed by a non-conductive layer of the PCB, under which non-conductive layer the sensing electrodes are arranged in such a way, that the electrodes are electrically separated from the cavity. For example, the electrodes can be arranged in a none-top layer of the PCB. The non-conductive layer can therein be an insulating layer, configured for electrically insulating the electrodes from the liquid in the cavity.

In another embodiment, the electrodes of the PCB can be configured as top layer tracks of the PCB, covered by a layer of glass, in particular by a sheet of glass, which expands over at least the entire underside of the cavity formed by the dome. The layer according to the invention is therein configured to enhance the flow of the fluid in this intermediate layer, in particular compared to ordinary PCB-Electrodes. Such a flow-effect of the fluid can e.g. be established by a layer that is configured to establish a Slippery Wenzel State or a Slippery Cassie State in combination with the fluid used in the cavity, in particular with a layer provided by an according layer material in combination with a layer surface structure or layer surface micro-structure. For example, an electrodeposition of a black chromium thin film can for once be established with a surface that contains a large number of spheroids with different diameters up to several micrometers higher an accordingly a roughness coefficient of the black chromium surface (e.g. with Ra about 0.4 um). Black chromium can for the other also be deposited to established with a surface that has lamellar crystal morphology that leads to a strong level of dispersion and thereby a very low roughness coefficient (e.g. with Ra about 0.05 um, possibly comprising some micro-fissures). Such is dependent on the processing parameters during galvanization and/or a choice of an intermediate mediator material in-between the layer and the electrode.

In an embodiment, also the conductive first electrode at the dome can be separated from the fluid by some non-conducting thin inner layer, preferably of constant thickness, so that the conductive electrode substantially follows the shape of the dome. In a variant, the conductive dome electrode can therein be fully electrically isolated from the cavity.

An embodiment of the invention also relates to an according system providing the method, e.g. embodied as a computation unit. Such a device or system according to the present invention can comprises microcontrollers, microcomputers, DSPs or a programmable or hardwired digital logics, etc., wherefore the present invention can involve or be embodied as a computer program product with program code being stored on a machine readable medium or embodied as an electromagnetic wave (such as e.g. a wired or wireless data signal to be provided to the instrument, or a program stored at a remote (cloud-) computation unit linked to the instrument), which implements functionality according to the invention at least partially in software - which therefore is also an embodiment of the invention.

Devices, methods, systems, setups and computer programs according to the invention are described or explained in more detail below, purely by way of example, with reference to working examples shown schematically in the drawing.

Specifically,
Fig. 1 shows an example of an embodiment of a surveying instrument the present invention can be utilized in;
Fig. 2 shows an example of an embodiment to illustrate a sensing principle according to the present invention;
Fig. 3a shows a first example of a setup of an embodiment according to the invention;
Fig. 3b shows a second example of the setup of the embodiment according to the invention;
Fig. 3c shows a third example of the setup of the embodiment according to the invention;
Fig. 4 shows an example of a sectional view of a first embodiment according to the invention;
Fig. 5 shows an example of a sectional view of a second embodiment according to the invention;
Fig. 6 shows an example of a sectional view of a third embodiment according to the invention;
Fig. 7 shows different examples of drifts in an embodiment of a prior art tilt sensor after sensor movement;
Fig. 8 shows different examples of drifts in a first embodiment according to the invention;
Fig. 9 shows different examples of drifts in a second embodiment according to the invention;
Fig. 10 shows an example of a flow diagram of an embodiment according to the invention.

The diagrams of the figures should not be considered as being drawn to scale. Where appropriate, the same reference signs are used for the same features or for features with similar functionalities. Different indices to reference signs are used to differentiate between different embodiments of a feature which are exemplary shown. The terms "substantially" is used to express that a feature can, but in general is not required to be realized exactly up to 100%, but only in such a way that a similar or equal technical effect can be achieved. In particular, slight deviation, due to technology, manufacturing, constructional considerations, etc. can occur, while still within the meaning of the scope.

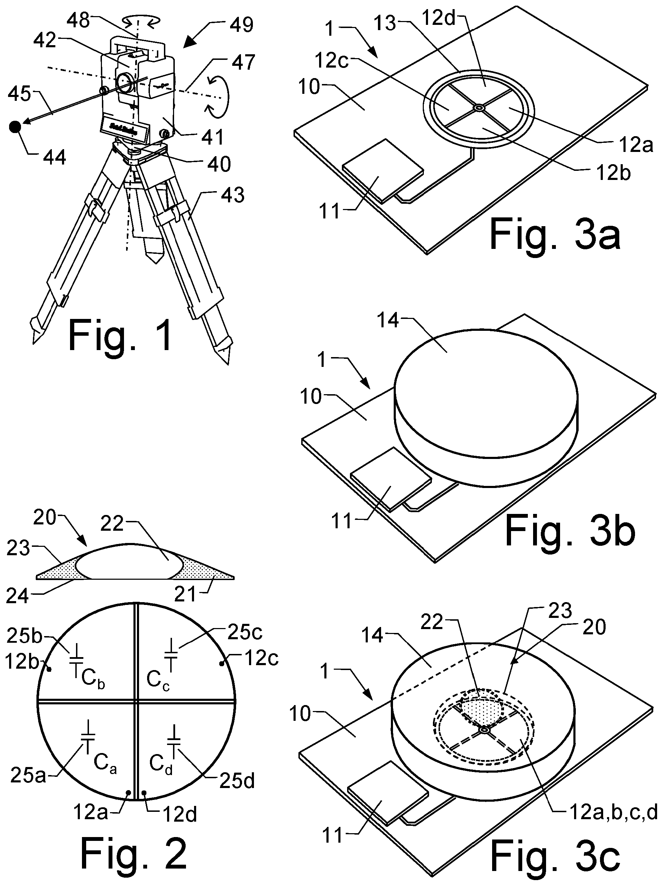

**Fig. 1** shows an example of an embodiment of a geodetic surveying instrument 49 configured as a theodolite or total station 1a. In the shown example, the instrument 49 is stationed with its instrument base 40 on a tripod 43. It comprises a horizontal movement axis 48 around which an upper portion (or turret) 41 of the instrument can be moved with respect to the instrument base 40. The upper part comprises a vertical movement axis 47 around which a telescope and/or distance measurement unit 42 can be moved. By this arrangement, a measurement light beam of the distance measurement unit can be aimed to a desired target point 44 in a measurement direction 45. The Instrument therein comprises a rotational instrument encoder at each of the movement axis 47,48 to derive a measurement value of an orientation of the measurement direction 45 with respect to the base 40, as well as a value of a distance information from the instrument 49 to the target point 44, whereby 3D spatial coordinates of the target point 44 can be derived and provided by the surveying instrument 49 as a measurement value. Those rotational encoders provide angular measurement values of the orientation of the measurement direction 4, respectively the instruments movement axes 47,48 in a high resolution, e.g. in the range arc seconds or below. The movement axis 48 and 47 of the instrument 49 are therein preferably motorized for providing a precise spatial positioning of the measurement direction 45 in space, which can also be remote controlled and/or automated. The instruments measurements are therein often referenced with respect to level or plumb direction, wherefore a tilt sensor according to the present invention can be comprised. Other instruments which can comprise a tilt sensor according to the invention are for example laser scanners, laser trackers, laser levels, rotation lasers, or various other construction instruments down to standalone tilt measuring instruments, which use an orientation reference with respect to level or plumb.

**Fig. 2** shows an illustration of the working principle of a tilt sensor according to the invention. A cavity 20 is therein formed by an outer shell, comprising a curved dome surface 23 and a substantially flat bottom 24 surface. In use of the tilt sensor, the dome 23 is configured to be arranged substantially at top with respect to gravity and rotationally symmetrical about its center. The cavity 20 is partially filled with a fluid 21 and also encloses a bubble 22. The bubble 22 can be embodied as a gas-bubble in the fluid, like e.g. an air bubble in some hydrocarbon fluid 21. In another embodiment, the bubble 22 can also be a second liquid, that is non-mixing with the fluid 21 and of different density or of sufficiently different surface tensions. Due to the dome shape 23, the bubble 22 will be at the top of the dome and located in the center of the dome shape 23, when the cavity is leveled. A deviation from level will move the position of the bubble out of the center of the dome 23. In a preferred embodiment, the bubble 22 can therein occupied at least 30% up to about 70% of the volume of the cavity, preferably about 50% of the volume or more.

This position and/or shape of the bubble 22 is evaluated by means of a capacitive measurement, wherefore the bubble 22 and the fluid 21 differ in their respective dielectric constants. Thereby, around the bubble 22, multiple capacities can be measured. As for example illustrated in the top view, the capacities Cₐ 25a, C_{b} 25b, C_{c} 25c, and C_{d} 25d, can be measured, whereas dependent on the position and/or shape of the bubble 22 inside the cavity, those capacities in-between the electrodes 12 at the bottom 24 and the dome surface 23 will vary. Thereby, in accordance with the position and/or shape of the bubble 22, a leveling information can be determined by the capacitive measurements.

By providing multiple capacity measurement electrodes 12a,12b,12c,12d at the bottom 24 (and/or at the dome 23), based on the sensed capacities which are dependent on the position and/or shape of the bubble 22 within the cavity, a tilt information can be determined based on those capacities, for example with a lookup table, functional dependency, machine learning, etc. For example, a two dimensional tilt sensor comprises at least three, preferably at least four separated bottom electrodes and at least one dome electrode.

A shortcoming of the basic functional principle in prior art is, that it is prone to drifts. In particular, those drifts have an effect that the tilt sensor signal is only stable after a certain time, which is often several minutes to hours - which is too long for a movable surveying instrument in the field that needs to be regularly set up at different locations. It shows that the air bubble 22 and/or the fluid 21 does not immediately achieve equilibrium in the gravity field, but it takes some time until equilibrium is reached, i.e. until all of the fluid 21 has moved to its final position and shape within the cavity 20. The present invention provides methods and sensor modifications to reduce the drift, in particular of drift due to movement of the tilt sensor 1 or due to temperature changes. Such drifts in particular occur during setup of the sensor 1 or when moving the sensor 1, e.g. after a fast change of tilt, a relocation of the sensor 1, etc. Besides the drift behavior depends on characteristics of the fluid 21 in the cavity 20 (i.e. viscosity, surface tension, ...), it in particular shows that harsh or fast movements of the sensor can be disadvantageous in view of drift and also temperature changes can result in drifts and/or hysteresis.

According to the invention, the cavity 20 is specifically configured to reduce such drift effects. In particular, the cavity 20 according to the invention can be configured with a shape and filled with a fluid 21 such that it is configured that the resulting bubble 22 touches the bottom 24 under the dome 23 (e.g. as shown), or in other words that the bubble 22 does not fully float in the fluid 21 with a significant pile of fluid below the bubble 22. According to the present invention - especially in a preferred embodiment - the bottom 24 can be wetted by the fluid 21, e.g. in such a way that a thin film or layer of the fluid 21 is in-between the bubble and the bottom (e.g. with a sub-millimeter thickness), but nevertheless, that there is no significant thick sea of fluid 21 (e.g. in millimeter of above thickness) under the bubble 22, such that the bubble 22 can be consider to clearly float atop of the fluid 21 and is not touching the bottom 24. In particular, in embodiment with an additional layer at the bottom 24 and/or the dome 23, there can always be a microscopic film of the fluid at the layer, even when the bubble 22 touches the additional layer, in particular as such a continuous wetting of the surface by the layer can reduce drift time after a movement of the sensor which requires the fluid 21 to flow to a new equilibrium that is dependent on the actual tilt - respectively the bubble 22 to deform and/or displace dependent on the actual tilt.

According to the invention at least the bottom electrodes 12 are formed as tracks of an electronics PCB and the bottom 24 can be covered by a thin layer or coating. Optionally also the dome electrode can be covered by a thin layer or coating, preferably layer or coating of the same material than at the bottom 24.

**Fig. 3a, Fig. 3b** and **Fig. 3c** are showing an example of an embodiment of a tilt sensor according to the present invention.

**Fig. 3a** shows an electronics printed circuit board 10, preferably embodied as a multi-layer PCB, of a tilt sensor 1 according to the invention, which is embodied to form the bottom 24 of the cavity 20, which bottom 24 comprises electrodes - in this example four electrodes - 12a, 12b, 12c, 12d underneath the here not shown dome 14. The electrodes are therein preferably arranged rotationally symmetrical, wherein a center can e.g. be spared or provided as e.g. a ground or shielding electrode. The dome 14 can e.g. be configured to be attached to the PCB, e.g. by gluing or soldering the dome 14 to the PCB 10 at the ring 13. The PCB preferably also comprise the evaluation electronics for the capacitive measurements, e.g. comprising active and passive electronic components, microchips, etc.

**Fig. 3b** shows the electronics printed circuit board 10, wherein an exemplary embodiment of a dome 14 is attached. In this example, the dome 14 is embodied as a cylindrical metal disk, with a dome shaped cavity at its underside. In other embodiments, the dome 14 can also be fully or at least partially be made of plastics with a metallization or metallic layer in the shape 23 of the dome that forms the dome-electrode as reference electrode for the capacitance measurement.

Besides a gluing or soldering of the, in this example disk shaped element that forms the dome 14 onto the PCB, there can also be mounting means for fixing the dome 14 to the PCB and/or for fixing the tilt sensor 1 to an instrument or the like.

Underneath the dome 14, the bottom electrodes 12 are covered by a layer of material in between the PCB-bottom electrodes 12 and the cavity 20.

According to the invention, the electrodes (and optionally also the dome-electrode) are covered by a thin layer or coating. The coating can in particular be configured in such a way, that gaps between electrodes and other surface irregularities are reduced or preferably omitted, leaving a preferably substantially flat surface of the electrodes. For example, a cover of the electrodes 12 by a sheet of glass, a filling of gaps in-between the electrodes 12, a providing of a layer of insulating PCB-material as bottom surface underneath the dome shape 23, a mechanical polishing, or a covering of the bottom surface with a layer of spongy material can be provided. Besides this aspect, the coating can also be configured to change the properties of the surface of the dome and/or electrodes. For example, a wetting angle and/or a surface tension at the electrodes can be configured, e.g. by either a hydrophobic/oleophobic coating or a hydrophilic/oleophilic coating depending on the used fluid of at least part of the inner surface of the cavity , preferably e.g. a silicone fluid or silicone oil. For example, silicone fluids are heat stable, very resistant to chemical attack, and not degradable. Silicone fluids can further be configured to have low-viscosity (e.g. about 10 mm2/s and below) and also lesser temperature-dependent viscosity and surface tension change than common mineral and synthetic oils.

Besides Silicone oils are non-toxic, neutral and chemically inert, electrical insulators and generally temperature stable from about -40 to +180°C. They are available at densities from 0.76 to 1.07 g/cm3, and viscosities from 0,6 to 10 milli Pascal second and generally have a low surface tension of 21.5mN/m (25°C) or less, and a kinematic viscosity < 10 Centi-Stokes (cSt), preferably e.g. about 1 cSt.

In an embodiment, the electrodes at the bottom and/or at the dome can be covered by a layer of black chromium. For applying black chromium, a base material can e.g. be a non-ferrous metal such as copper, nickel, zinc or a metallization by those materials, although other base materials can work as well. Also plastic surfaces can be used, e.g. when germinated with metal, followed by a chemical nickel or copper plating and or a galvanic application or growing of this metallic base surface. Thereupon, the black chromium can be applied, e.g. in an established galvanic process.

**Fig. 3c** shows the electronics printed circuit board 10, with an X-Ray view of the dome 14, where the dome shape 23 and the bottom electrodes 12a,12b,12c,12d at the PCB 10 are visible. Also shown is the bubble 22, of which location inside of the cavity is sensed by multiple capacitive measurements. In an embodiment, in which absolute capacity values are sensed, besides the location of the bubble 22, also a temperature can be sensed based on the measured absolute capacities. For example, a calibration of absolute capacity measurements at three or more different temperatures can provide knowledge of a change of electrical capacity upon changes of temperature, which can be used for calibrating the tilt measurements, but also for deriving a temperature information.

The arching 23 of the dome 14 can e.g. be formed according to a polynomial function, in particular in form of a bow which ends at substantially zero at the outer circumference of the dome 14. Therein the arching can be shaped to provide a preferable readout characteristic, for example with a maximum sensitivity around exact level, or a linear readout characteristic. In another embodiment, the readout can also be established according to a mathematical function, by a lookup table, or by a machine learned approach to result from the capacitance readings in angular tilt values in two directions.

In a preferred embodiment, the sensing electrodes surfaces are configured to cover a large, preferably substantially the full bottom surface underneath the dome. For example, combined with an arching of the dome that fades to substantially zero height at the outer border and/or to provide substantially no sharp, rectangular corners.

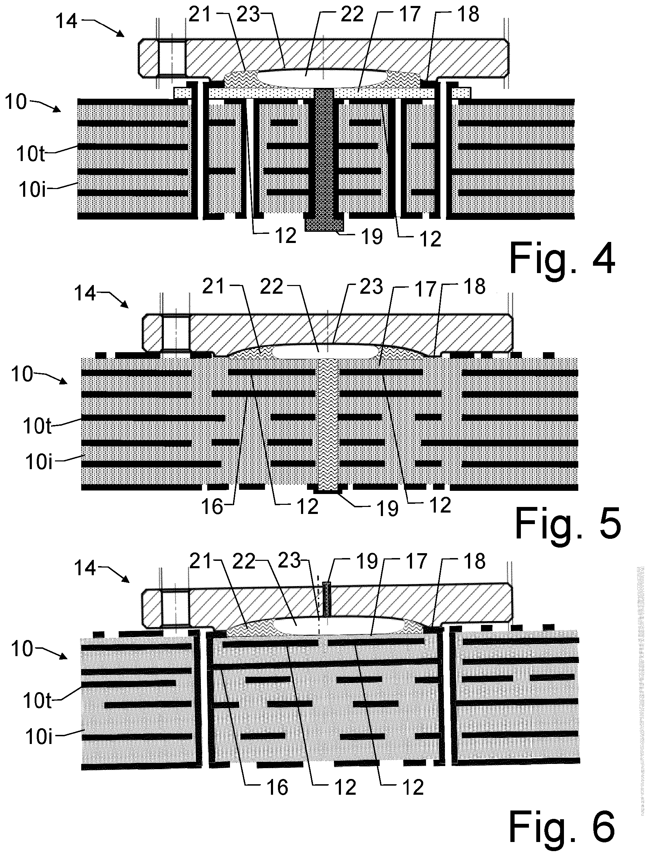

**Fig. 4** shows a section of a first example of a PCB 10 of a tilt sensor 1 according to the present invention.

The multilayer PCB 10 in this example comprises six layers of tracks 10t and insulating material 10i, such as FR4 or another PCB-Material in-between. The PCB 10 is stack up with glass 17 as top layer underneath the dome 14. Below the glass sheet 17 there are the capacitive sensing electrodes 12. The electrodes can therein be configured as a substantially rotationally symmetric arrangement of electrode-surfaces formed by PCB-tracks under the dome 14, for example, four circle sectors of equal size, optionally with a center (around the hole 19) spared out and/or with a minimal spacing in-between.

At the center, there is a hole 19 in the PCB 10 from the cavity to the outside configured for filling the fluid 21 into the cavity and afterwards closing the hole 19, e.g. by a plug as shown, or by a cover, by glue, by soldering or by laser welding. The fluid 21 is therein filled up to a level such that a bubble 22 remains, preferably with a defined volume. The dome arching 23 is formed by an - e.g. metal or metallic coated - dome part 14 which is fixed to the PCB 10, e.g. by soldering, glue, screws or the like. For example, an electrical track can form a ring 18 on the glass, to which the dome 14 is soldered or glued.

The metal of the dome 14 is therein in electrical contact with a track 10t of the PCB 10 to form an electrode of the tilt sensor according to the invention.

In an embodiment, the inner dome can have an outer diameter of e.g. about 1 to 5 cm and a height of about 0.5 to 5mm, the hole 19 can e.g. be about 1.5mm and the PCB 10 can be of regular thickness as common in the art.

In an embodiment, a curvature of the dome can be primarily configured as a variable, dome-diameter dependent, curvature in such a way that different accuracy requirements at different angles are met. Therein, the dome can be configured in such a way that the bubble moves relatively fast up to about two degree of tilt - so that a high tilt-sensitivity is established - and then the sensitivity slowly decreases for larger tilt angles - such that the sensitivity is relatively reduced with its maximum about level orientation. Substantially this means that the dome will be relatively more flat in its center region. Simulation and or experiments can help to refine the basic dome shape proposes herein.

In a preferred embodiment according to the present invention, the cavity 20 is configured in such a shape, that the bubble 22 is in contact with both, the upper dome 14 and the lower base 24 (respectively in contact with the layer 17 according to the invention), in particular also when the sensor is about level orientation, preferably in any orientation of the sensor. The shape of the cavity can therein for example be configured with a - relatively to the dome-diameter - flat dome arching. The bubble 22 can therein occupy at least 30% of the volume of the cavity, preferably at least 50% or more. Thereby, a good sensitivity can be achieved while keeping the drift effects of the tilt sensor low. The cavity can therein in particular be configured in accordance with the fluid 21 that is used, for example in such a way that a height of the dome 14 over the bottom 24 with the electrodes 12, is configured to be lower than about twice the capillary length of the fluid 21.

The bubble 22 being in contact does therein not mean that there cannot be a thin film of fluid 21 in-between the bubble 22 and the layer 17 - in an embodiment according to the invention the layer 17 is preferably configured in such a way, that the layer 17 wetted by the fluid 21 in such a way, that the gas of the bubble 22 cannot stick or preferably get in direct contact with the layer 17, as the layer 17 will establish and hold a thin film of the fluid 21 in-between.

**Fig. 5** shows a section of a second example of a PCB 10 of a tilt sensor 1 according to the present invention. In this embodiment, the outer conductor layer of the PCB 10 is configured to be blank of conductor tracks underneath the dome forming cavity of the metal dome-cover 14, so that an insulating layer 10i of the PCB 10 forms the bottom of the cavity. The sensing electrodes 12 are arranged in an inner conducting layer 10t of the PCB 10, in particular in the first inner layer seen from the cavity and fully covered by an insulating layer of PCB base material. In a layer below the sensing electrodes 12 there can be a shielding layer 16 to avoid disturbances from other conductor track of the PCB 10. In another embodiment, the layer below the dome needs not to be the outermost insulating layer of the PCB, but can also be an inner layer of the PCB, with the layers above this inner layers being spared out to form a part of the cavity inside the PCB 10.

The outer conducting layer can therein comprise a track 18 shaped at the outer circumference of the dome shape 23 in order to contact and/or solder the metal dome cap 14 onto the PCB 10. The fluid can be filled through a closable hole 19 by an amount of the fluid 21 such that a bubble 22 remains.

**Fig. 6** shows a section of a third example of a PCB 10 of a tilt sensor 1 according to the present invention. In this example, the sensor 1 is tilted about one degree, as it can be seen from the bubble 22 which is shifted.

Here, the fluid 21 is filled through the metal dome cover 14 and the bottom surface 17 of the cavity underneath the dome shape 23 is not interrupted by the hole 19 but continuous flat. Instead, a filling hole 19 for the fluid 21 is configured in the dome 14, which can be closed after a filling of a defined amount of the fluid 21, for example by a plug, which plug can in particular be configured to at least substantially close flush with the curvature at the top of the dome. Otherwise this embodiment is rather similar than the one described before.

An aspect according to the present invention is to provide an accurate tilt sensing with improved drift behavior, in particular to reduce or remove drift after tilt change of the sensor, so users have a reduced wait-time until the tilt signal is stable and valid, e.g. when setting up a surveying instrument in the field.

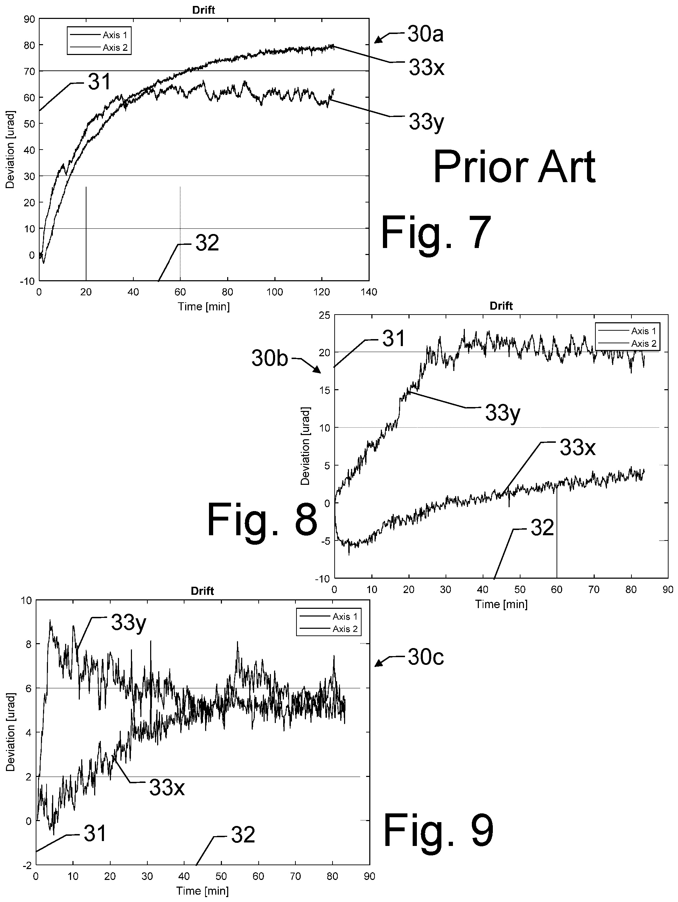

**Fig. 7** shows an example of a tilt sensor 1 in a use case, where the sensor experiences a hard move, for example of about 20°, which can happen during a setup of a measurement instrument 49.

In a prior art design, the tilt readings from the sensor 1 will rather slowly drift or adapt to their final value as shown in diagram 30a. The angular deviation 31 of the sensor readings in urad over time 32 in minutes are approaching rather slowly to its final value for the two axes 33x and 33y of the tilt values derived by such a tilt sensor of prior art - regularly taking many minutes time to stabilize. Yet, an operator of the instrument can often not wait that long to evaluate and use those readings for his measurements.

In the diagram 30b in **Fig. 8** shows an approach according to the present invention, wherein the change of scale in the diagram axes 31 and 32 has to be noted to be aware of the full effect. The tilt readings of the axes 33x and 33y reach their final value not only in shorter time, but also the amount of angular error is reduced according to the invention. The drift of the sensor 1 readings is faster and also smaller in its angular value compared to before.

According to the invention, the tilt sensor therefore comprises a bottom of the dome with sensing electrodes that are separated from the fluid by layer of material, preferably a layer of spongy material or a flat layer of non-conductive material -such as a surface of an insulation material of the PCB that forms the bottom underneath the dome.

In an embodiment according to the invention as shown in the diagram 30c of **Fig. 9****,** there is in addition also an initial movement -as another aspect of the present invention-applied.

During such an initial movement, the sensor 1 is moved in at least one, preferably in two directions. In a simplified explanation, this move so to say, collects the liquid/bubble parts that were «lost or stuck» during the immediate, hard move at setup. In the shown example, the initial movement is done by moving the sensor 1 about ±7° with respect to gravity in both directions. Another option is to move the sensor to an inclination of e.g. about 7°, and then rotate the sensor at this inclination around vertical. The angle of the move must not be exactly 7° but can be in a range configured to be high enough to achieve some reasonable effect but low enough be not similar to a hard move. For example, but not limiting moves of an angle between about 5° or 10° tend to be preferred embodiments. The movement is therein carried out at low speed, taking several seconds, e.g. about 15s or 40s or more, wherein slower speeds tend to be preferable in view of drift reduction but also applicability and time consumption in the field has to be kept reasonable. But also experiments can be used to derive a preferred exact angle of the move and/or a preferred speed of the move where the drift is minimized most for a specific tilt sensor 1, or the drift results to be within acceptable boundaries for a specific application of the tilt sensor 1.

In a surveying instrument, comprising motorized movement axis the tilt sensor can be arranged and the movement axis can be configured in such a way, in order to execute such a movement, e.g. upon initialization of the instrument 49 and/or for the tilt sensor 1.

In embodiments, where the instrument 49 comprises no motorized platform to move the tilt sensor 1, the initial movement can also be established by hand or another embodiment according to this principle can also use a vibrating of the tilt sensor 1 instead of a movement to reduce the drift effect. After a setup of the sensor 1, or when the sensor 1 is relocated, a vibrating element is quickly turned-on and off again. During the vibrations, the liquid/bubble parts that were "lost or stuck" during the immediate move can converge. The vibrating element can e.g. be an electric motor with an unbalance mass, a piezoelectric element, a loudspeaker, etc. In an embodiment the vibrations can be induced in form of ultrasonic sounds, e.g. by an ultrasonic transducer in or near the cavity or by applying an electrical field in the frequency range of ultrasonic sound waves in the fluid, preferably in resonance, wherein thereby occurring standing waves can preferably be configured to have their knots about the level position of the bubble.

In an embodiment, the substantially the whole inner surface of the cavity, which comprises the dome and the base (in particular the dome- and the base-electrodes), can be covered by the layer according to the invention, wherein substantially the whole of the cavity means that there can also be minor exceptions, e.g. with a coverage of about at least 80% or 90% of the inner cavity surface or the like.

In a first embodiment, the layer covering the electrodes, preferably covering substantially the whole inner cavity, is configured in such a way, that the fluid is completely in Cassie state (or Cassie-Baxter) state, so that the fluid rolls of from the surface easily.

In a second embodiment, the layer covering the electrodes, preferably covering substantially the whole inner cavity, is configured in such a way, that the fluid is completely in Wenzel State, such that the surface is wetted by the fluid, preferably down to microscopic scale. A spreading of a liquid on a rough hydrophilic surface driven by capillarity is sometimes also referred to as Hemiwicking.

The layer is therein in particular configured to reduce or preferably avoid excessive Cassie-to-Wenzel transitions, as those tend to result in (micro-) bubble at the surface which tend to take time to resolve, which manifest in a drift time until a stable, final reading from the bubble sensor can be achieved.

It turns out not only a Cassie state (liquid drops sitting on the top of a solid textures with air trapped underneath) results in high droplet mobility on a surface - as it might be expected - but also a well configured Wenzel state (drops impregnate the solid textures) can result in high droplet mobility - resulting in slippery rough surfaces with a special texture. A layer 17 configured to provide Nano-scale textures can provide infusing fluid lubricant into those nano-textures, which creates a highly slippery surface for the fluid. Such a layer 17 can thereby reduce drift effects of a sensor 1 according to the invention due this high mobility of the fluid 21 in the cavity 20.

In particular, it can be advantageous to avoid a Cassie-to-Wenzel transition, as such could result in Micro-Bubbles of the Bubble 22 to stick to the surface of the cavity 20, which degrades sensor accuracy and results in relatively long drift times of sensor 1 which is required for those Micro-Bubbles to dissolve into the main Bubble 22 again.

In other words, a layer 17 according to the present invention can be configured to be absorptive, absorbent, receptive or bibulous for the fluid 21 at a microscopic scale, in particular in such a way that a wetting of the layer 17 by the fluid 21 occurs, which might also be expressed as a kind of sponge-like or moisturized layer 17 that is wetted by the fluid 21, e.g. with a wetting angle or contact angle close to zero.

In knowledge of the present invention, an interpretation of the drift of such a sensor 1 can e.g. be established in a way that possibly a fluid advances over a previously dry surface but recedes from previously wet surface, wherein a contact angle hysteresis can arise, e.g. by at least partially absorption of the fluid. Such can result in slow, time-dependent contact angles, which can lead to slow sensor drift effects in a range of multiple minutes. For example, the drift can depend on at least one of the effects of:
- by resulting in and dissolving of Micro-Bubbles, in particular at the surface of the cavity 20,
- by resulting in a rupture of a film of the fluid 21 at the inner surface of the cavity 20,
- by resulting in a slow, trailing wave of fluid 21 along the surface of the cavity 20, or
- by a kind of sloshing of the fluid 21 in the cavity 20 that has to abate, in particular at the surface of the cavity 20.

In another embodiment which could be seen as another invention for the same technical problem, such could be achieved by providing a surface layer that configured to be substantially completely non-wetted by the fluid, or in other words which is highly fluid-phobic. Such a surface configured to always repel the fluid without getting wetted. The fabrication of such a surface can e.g. be carried out through a black chromium electrodeposition, followed by immersing an ethanolic stearic acid solution or the like.

A Young state of the fluid at the layer would also be an option.

Besides the surface properties alone, there is also the fluid which has to be taken into consideration. In particular, according to the invention, a pairing of fluid and surface layer is configured in such a way to reduce drift effects, mainly by avoiding a rupture of the fluid film when the fluid is moved, which effect is in particular dominant at high movement speeds. Besides the surface tension of the fluid, also aspects like pressure, temperatures, etc. are influencing those consideration, but in general latter are pre-given by the environmental conditions of this application and not reasonable to be highly influenced in most of applications of a tilt sensor according to the present invention.

Preferably, such is achieved by providing a surface layer that configured to be substantially continuously wetted, or in other words which is highly fluid-philic. Such a surface configured to always attract at least a micro-film of the fluid, avoids a rupture of a fluid film on the layer, avoids a sticking of micro gas bubbles to the layer, and/or avoids slow post-flow of part of the fluid or a slow retreating boundary surface of the fluid on the layer - as there is always a fluid film in-between and the fluid adhesion undermines an establishing of inhomogeneity at the layer.

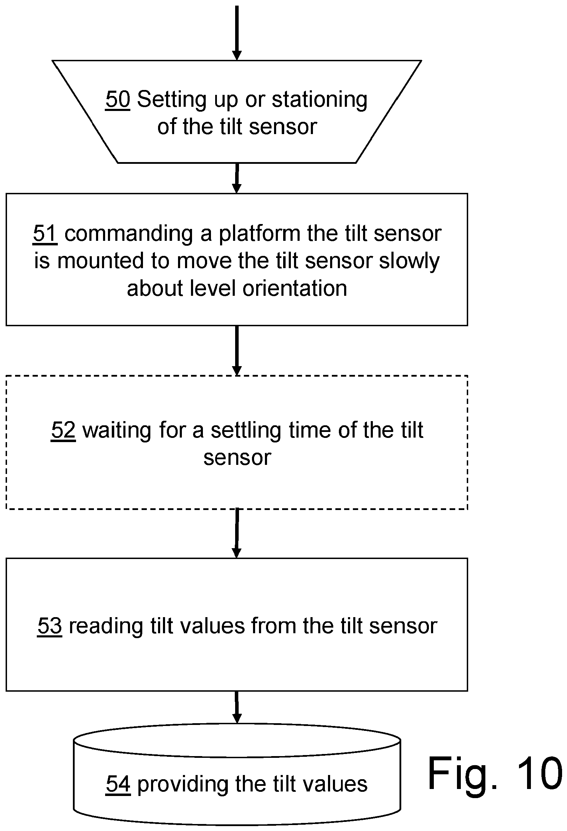

An example of an embodiment of a method of tilt sensing according to the present invention is shown in **Fig. 10****.** For example, such a can comprise at least:
▪ A setting up or stationing of the tilt sensor, respectively of an instrument comprising the tilt sensor
   - as symbolized in Box 50. This can e.g. comprise fast and harsh tilting movements applied to the sensor.
▪ A commanding of a platform the tilt sensor is mounted to, in order to move the tilt sensor slowly about level orientation - as symbolized in Box 51. For example, a motorized axis of the instrument is commanded to move the tilt sensor about a roughly estimated level orientation, for example about 5 to 10 degrees at a speed of about 0,2 degrees per second or slower.
▪ Optionally, there can be a waiting for a settling time of the tilt sensor - as symbolized in Box 52. This can comprise a waiting of a predefined settling time (which has e.g. been derived as a characteristic of the tilt sensor and/or for this moving) or by observing a time derivation of the tilt sensor readouts to detect a drifting value that is within a predefined tolerable margin of drift.
▪ A reading tilt values from the tilt sensor - as symbolized in Box 53.
▪ A utilizing the derived tilt values, e.g. by providing the tilt values to the instrument - as symbolized in Box 54. Then the instrument can use those tilt values as measurement result and/or to reference further measurements with respect to those tilt values.

## Claims

1. A capacitive measuring tilt sensor (1), in particular a capacitive evaluated circular bubble level configured for measuring two axis level information, comprising,
▪ a cavity (20) comprising a fluid (21) and a bubble (22) of a gas with dissimilar relative dielectric constants, which cavity (20) is configured with,
o an electrically conducting or conductively plated dome (14) forming a dome electrode, and
o a base (24) with at least three, preferably four, bottom electrodes (12),
▪ a capacitance measuring unit (11) configured to determine electrical capacitances (25) between the dome electrode and each of the bottom electrodes (12), and
▪ an evaluation unit (11) configured to derive a tilt information on basis of the capacitances (25),
▪ wherein the base (24) is configured as an electronic PCB (10) comprising conductive circuit tracks (10t) and isolating base material (10i), and the bottom electrodes (12) are formed by the circuit tracks (10t) of the PCB (10) under the dome (14), wherein
▪ the cavity (20) and the fluid (21) are configured in such a way, that the bubble (22) touches a top of the dome (14) and the base (24), **characterized in that**
▪ the bottom electrodes (12) are covered by a layer (17) of material in-between the electrodes (12) and the fluid (21),
which layer (17) is configured to provide a surface that is configured to be wetted by the fluid (21), in particular to interact with the fluid (21) in such a way that an at least monomolecular film of the fluid covers the layer (17).

2. The capacitive measuring tilt sensor (1) according to claim 1, **characterized in that,** the layer (17) provides a surface structure of the material that is configured to be a fluid-philic surface structure which provides a contact angle smaller than 90° in combination with the fluid (21),
in particular configured as a sponge like coating layer (17).

3. The capacitive measuring tilt sensor (1) according to at least one of claims 1 or 2, **characterized in that,** the layer (17) at the base (24) is an isolation layer of the PCB (10), in particular formed as a glass-fiber/epoxy material surface at the inside of the cavity (20), wherein the bottom electrodes (12) are formed by the circuit tracks underneath that isolation layer, in particular wherein the PCB (10) is an FR4-PCB and said isolation layer is an outermost top FR4 isolation layer of the PCB (10).

4. The capacitive measuring tilt sensor (1) according to at least one of claims 1 or 2, **characterized in that,** the layer (17) is configured as a conductive surface coating applied to the electrodes that differs from copper, in particular which provides a non-stick surface towards the inner of the cavity (20).

5. The capacitive measuring tilt sensor (1) according to claim 4, **characterized in that,** the layer (17) is configured as a black chromium layer.

6. The capacitive measuring tilt sensor (1) according to claim 1, **characterized in that,**
the layer (17) is formed by an electrically isolating sheet of glass, ceramic or plastic atop of the bottom electrodes (12).

7. The capacitive measuring tilt sensor (1) according to any one of claims 1 to 6, **characterized in that,** the dome (14) and the base (24), preferably substantially a whole inner surface of the cavity (20), is covered by the layer (17).

8. The capacitive measuring tilt sensor (1) according to at least one of claims 1 to 7, **characterized in that,** the dome (14) is a metallic dome or a metalized plastics dome with its inner arching (23) coated with a same layer as the bottom electrodes (12), preferably wherein the dome (14) is circumferentially glued or soldered to the PCB (10), in particular wherein the dome (14) is configured rotationally symmetrical.

9. The capacitive measuring tilt sensor (1) according to at least one of claims 1 to 8, **characterized in that,** a shape of the dome (14) is configured with an arching that is fading to substantially zero height over a substantially flat base (24) at its outer circumference, in particular wherein the dome-shape is configured with an arching curvature shape configured to provide a tilt dependent bubble shape and position in the dome that is most tilt-sensitive at a tilt of about level-orientation and decreases in tilt-sensitivity with a deviation from level-orientation, preferably with a substantially linear decrease of sensitivity over a tilt angle deviation from level, preferably with a substantially flat arching at a center of the shape and an increasing curvature towards an outer circumference of the dome (14).

10. The capacitive measuring tilt sensor (1) according to at least one of claims 1 to 9, **characterized in that,** the cavity (20) comprises a hole (19), in particular a preferably central hole in the dome (14) or in the PCB (10), configured to fill the fluid (21) into the dome (14), which hole is closed by a plug inserted into the hole (19), that is configured to end substantially flat with the inner surface of the cavity (20), preferably wherein at least an inner tip of the plug is covered by the layer (17).

11. The capacitive measuring tilt sensor (1) according to at least one of claims 1 to 10, **characterized in that,** the capacitances (25) are derived as absolute capacity values and/or wherein the evaluation unit (11) is configured to derive a temperature value on basis of those absolute capacitance values (25),
in particular wherein the evaluation unit (11) is configured to derive the tilt information on basis of the capacitances (25) with this temperature as a parameter to compensate for temperature dependent drifts of the tilt value.

12. The capacitive measuring tilt sensor (1) according to at least one of claims 1 to 11, **characterized in that,** the bubble (22) is configured to occupy 30% to 70% of a volume formed by the cavity (20), preferably at least 50% of the cavity (20),
in particular wherein the fluid (21) is configured as a silicone-oil, fluorocarbon or hydrocarbon of defined viscosity, surface tension and/or wetting angle, preferably wherein the fluid is a silicone oil of a viscosity below 10 cStokes, preferably about or below 1 cStokes, preferably with a dielectric constant in a range of εᵣ ≈ 1.5 to 40.

13. The capacitive measuring tilt sensor (1) according to at least one of claims 1 to 12, **characterized in that,** the evaluation unit (11) is provided and configured to command a moving of the tilt sensor (1) in advance of the deriving of the tilt information, in particular a tilting moving and/or a vibrating moving, in particular with a tilting of about 5-10° over a time of at least a few seconds, preferably in two axes.

14. A Method of initializing a capacitive measuring tilt sensor (1) according to one of claims 1 to 13, for reducing a drift-time of tilt readings from the sensor (1), with
▪ a setting up an instrument (49) comprising the capacitive measuring tilt sensor (1) at a desired instrument location and orientation,
▪ a, preferably motorized, moving of portion of the instrument (49) that comprises the capacitive measuring tilt sensor (1), which moving is configured to pivot the gas-bubble (22) in the cavity (20) about the desired instrument orientation,
▪ a reverting to the desired instrument orientation and
▪ a deriving of the tilt readings.

15. A geodetic surveying instrument (49), comprising a capacitive measuring tilt sensor (1) according to any one of claims 1 to 13, in particular a theodolite, a tachymeter, a total station, a laser scanner, a laser tracker, a rotary laser, a laser-liner, a laser marking unit, in particular wherein a moving according to claim 13 is established during an initialization routine by motorized aiming axis of the instrument.

## Patentansprüche

1. Kapazitiver Neigungsmesssensor (1), insbesondere eine kapazitive evaluierte kreisförmige Nivellierlibelle, die zum Messen zweiachsiger Nivellierformationen konfiguriert ist, umfassend
▪ einen Hohlraum (20), der ein Fluid (21) und eine Blase (22) eines Gases mit ungleichen relativen Dielektrizitätskonstanten umfasst, wobei der Hohlraum (20) konfiguriert ist mit
o einer elektrisch leitenden oder leitend beschichteten Kuppel (14), die eine Kuppelelektrode bildet, und
o einer Basis (24) mit mindestens drei, vorzugsweise vier, Bodenelektroden (12),
▪ eine Kapazitätsmesseinheit (11), die dazu konfiguriert ist, elektrische Kapazitäten (25) zwischen der Kuppelelektrode und jeder der Bodenelektroden (12) zu bestimmen, und
▪ eine Evaluationseinheit (11), die dazu konfiguriert ist, Neigungsinformationen auf Grundlage der Kapazitäten (25) abzuleiten,
▪ wobei die Basis (24) als eine elektronische PCB (10) konfiguriert ist, die leitende Schaltungsbahnen (10t) und ein isolierendes Basismaterial (10i) umfasst, und die Bodenelektroden (12) durch die Schaltungsbahnen (10t) der PCB (10) unter der Kuppel (14) gebildet sind,
wobei
▪ der Hohlraum (20) und das Fluid (21) so konfiguriert sind, dass die Blase (22) eine Oberseite der Kuppel (14) und der Basis (24) berührt,
**dadurch gekennzeichnet, dass**
▪ die Bodenelektroden (12) durch eine Schicht (17) eines Materials zwischen den Elektroden (12) und dem Fluid (21) bedeckt sind, wobei die Schicht (17) dazu konfiguriert ist, eine Fläche bereitzustellen, die dazu konfiguriert ist, durch das Fluid (21) benetzt zu werden, insbesondere mit dem Fluid (21) so zu interagieren, dass mindestens ein monomolekularer Film des Fluids die Schicht (17) bedeckt.

2. Kapazitiver Neigungsmesssensor (1) nach Anspruch 1, **dadurch gekennzeichnet, dass** die Schicht (17) eine Flächenstruktur des Materials bereitstellt, die dazu konfiguriert ist, eine fluidphile Flächenstruktur zu sein, die einen Kontaktwinkel kleiner als 90° in Kombination mit dem Fluid (21) bereitstellt, insbesondere als eine schwammähnliche Beschichtungsschicht (17) konfiguriert ist.

3. Kapazitiver Neigungsmesssensor (1) nach mindestens einem der Ansprüche 1 oder 2, **dadurch gekennzeichnet, dass** die Schicht (17) an der Basis (24) eine Isolationsschicht der PCB (10) ist, insbesondere als eine Glasfaser-/Epoxidmaterialfläche auf der Innenseite des Hohlraums (20) gebildet, wobei die Bodenelektroden (12) durch die Schaltungsbahnen unter der Isolationsschicht gebildet sind, insbesondere wobei die PCB (10) eine FR4-PCB ist und die Isolationsschicht eine äußerste obere FR4-Isolationsschicht der PCB (10) ist.

4. Kapazitiver Neigungsmesssensor (1) nach mindestens einem der Ansprüche 1 oder 2, **dadurch gekennzeichnet, dass** die Schicht (17) als eine leitende Flächenbeschichtung konfiguriert ist, die auf die Elektroden aufgetragen ist und sich von Kupfer unterscheidet, die insbesondere eine nicht klebende Fläche in Richtung des Inneren des Hohlraums (20) bereitstellt.

5. Kapazitiver Neigungsmesssensor (1) nach Anspruch 4, **dadurch gekennzeichnet, dass** die Schicht (17) als eine Schwarzchromschicht konfiguriert ist.

6. Kapazitiver Neigungsmesssensor (1) nach Anspruch 1, **dadurch gekennzeichnet, dass** die Schicht (17) durch eine elektrisch isolierende Lage aus Glas, Keramik oder Kunststoff auf den Bodenelektroden (12) gebildet ist.

7. Kapazitiver Neigungsmesssensor (1) nach einem der Ansprüche 1 bis 6, **dadurch gekennzeichnet, dass** die Kuppel (14) und die Basis (24), vorzugsweise im Wesentlichen eine gesamte Innenfläche des Hohlraums (20), durch die Schicht (17) bedeckt sind.

8. Kapazitiver Neigungsmesssensor (1) nach mindestens einem der Ansprüche 1 bis 7, **dadurch gekennzeichnet, dass** die Kuppel (14) eine Metallkuppel oder eine Kuppel aus metallisiertem Kunststoff ist, wobei ihre Innenwölbung (23) mit einer gleichen Schicht wie die Bodenelektroden (12) beschichtet ist, vorzugsweise wobei die Kuppel (14) in Umfangsrichtung mit der PCB (10) verklebt oder verlötet ist, insbesondere wobei die Kuppel (14) rotationssymmetrisch konfiguriert ist.

9. Kapazitiver Neigungsmesssensor (1) nach mindestens einem der Ansprüche 1 bis 8, **dadurch gekennzeichnet, dass** eine Form der Kuppel (14) mit einer Wölbung konfiguriert ist, die sich auf eine Höhe von im Wesentlichen null über einer im Wesentlichen ebenen Basis (24) an ihrem Außenumfang verringert, insbesondere wobei die Kuppelform mit einer Wölbungskrümmungsform konfiguriert ist, die dazu konfiguriert ist, eine neigungsabhängige Blasenform und -position in der Kuppel bereitzustellen, die bei einer Neigung von etwa Nivellierungsausrichtung am stärksten neigungsempfindlich ist und deren Neigungsempfindlichkeit sich mit einer Abweichung von der Nivellierungsausrichtung verringert, vorzugsweise mit einer im Wesentlichen linearen Verringerung der Empfindlichkeit über eine Neigungswinkelabweichung von der Nivellierung, vorzugsweise mit einer im Wesentlichen ebenen Wölbung an einem Mittelpunkt der Form und einer zunehmenden Krümmung in Richtung eines Außenumfangs der Kuppel (14).

10. Kapazitiver Neigungsmesssensor (1) nach mindestens einem der Ansprüche 1 bis 9, **dadurch gekennzeichnet, dass** der Hohlraum (20) ein Loch (19) umfasst, insbesondere ein vorzugsweise zentrales Loch in der Kuppel (14) oder in der PCB (10), das dazu konfiguriert ist, das Fluid (21) in die Kuppel (14) zu füllen, wobei das Loch durch einen Stopfen verschlossen ist, der in das Loch (19) eingesetzt ist und der dazu konfiguriert ist, im Wesentlichen bündig mit der Innenfläche des Hohlraums (20) abzuschließen, vorzugsweise wobei mindestens eine Innenspitze des Stopfens durch die Schicht (17) bedeckt ist.

11. Kapazitiver Neigungsmesssensor (1) nach mindestens einem der Ansprüche 1 bis 10, **dadurch gekennzeichnet, dass** die Kapazitäten (25) als absolute Kapazitätswerte abgeleitet sind und/oder wobei die Evaluationseinheit (11) dazu konfiguriert, einen Temperaturwert auf Grundlage der absoluten Kapazitätswerte (25) abzuleiten, insbesondere wobei die Evaluationseinheit (11) dazu konfiguriert ist, Neigungsinformationen auf Grundlage der Kapazitäten (25) mit der Temperatur als Parameter abzuleiten, um temperaturabhängige Verschiebungen des Neigungswerts zu kompensieren.

12. Kapazitiver Neigungsmesssensor (1) nach mindestens einem der Ansprüche 1 bis 11, **dadurch gekennzeichnet, dass** die Blase (22) dazu konfiguriert ist, 30 % bis 70 % eines durch den Hohlraum (20) gebildeten Volumens einzunehmen, vorzugsweise mindestens 50 % des Hohlraums (20),
insbesondere wobei das Fluid (21) als ein Silikonöl, Fluorkohlenstoff oder Kohlenwasserstoff mit definierter Viskosität, Flächenspannung und/der definiertem Benetzungswinkel konfiguriert ist, vorzugsweise wobei das Fluid ein Silikonöl mit einer Viskosität unter 10 cStokes ist, vorzugsweise etwa oder unter 1 cStokes, vorzugsweise mit einer Dielektrizitätskonstanten in einem Bereich von εᵣ ≈ 1,5 bis 40.

13. Kapazitiver Neigungsmesssensor (1) nach mindestens einem der Ansprüche 1 bis 12, **dadurch gekennzeichnet, dass** die Evaluationseinheit (11) dazu bereitgestellt und konfiguriert ist, eine Bewegung des Neigungssensors (1) vor dem Ableiten der Neigungsinformationen zu befehlen, insbesondere eine Neigungsbewegung und/oder eine Vibrationsbewegung, insbesondere mit einer Neigung von etwa 5-10° über eine Zeit von mindestens einigen Sekunden, vorzugsweise in zwei Achsen.

14. Verfahren zum Initialisieren eines kapazitiven Neigungsmesssensors (1) nach einem der Ansprüche 1 bis 13 zum Reduzieren einer Verschiebungszeit von Neigungsmesswerten von dem Sensor (1) mit
▪ einem Einrichten eines Instruments (49), das den kapazitiven Neigungsmesssensor (1) umfasst, an einem gewünschten Instrumentort und in einer gewünschten Instrumentausrichtung,
▪ einem, vorzugsweise motorisierten, Bewegen eines Abschnitts des Instruments (49), das den kapazitiven Neigungsmesssensor (1) umfasst, wobei das Bewegen dazu konfiguriert ist, die Gasblase (22) in dem Hohlraum (20) um die gewünschte Instrumentausrichtung zu schwenken,
▪ einem Zurückkehren in die gewünschte Instrumentausrichtung und
▪ einem Ableiten der Neigungsmesswerte.

15. Geodätisches Vermessungsinstrument (49), umfassend einen kapazitiven Neigungsmesssensor (1) nach einem der Ansprüche 1 bis 13, insbesondere einen Theodolit, ein Tachymeter, eine Totalstation, einen Laserabtaster, einen Laser-Tracker, einen Rotationslaser, einen Laser-Liner, eine Lasermarkierungseinheit, insbesondere wobei eine Bewegung nach Anspruch 13 während einer Initialisierungsroutine durch eine motorisierte Sichtachse des Instruments etabliert wird.

## Revendications

1. Capteur d'inclinaison à mesure capacitive (1), en particulier un niveau à bulle circulaire à évaluation capacitive configuré pour mesurer des informations de niveau à deux axes, comprenant :
▪ une cavité (20) comprenant un fluide (21) et une bulle (22) d'un gaz avec des constantes diélectriques relatives dissemblables, laquelle cavité (20) est configurée avec
o un dôme électroconducteur ou plaqué conducteur (14) qui forme une électrode en dôme et
o une base (24) avec au moins trois, de préférence quatre, électrodes inférieures (12),
▪ une unité de mesure de capacité (11) configurée pour déterminer des capacités électriques (25) entre l'électrode en dôme et chacune des électrodes inférieures (12) et
▪ une unité d'évaluation (11) configurée pour dériver une information d'inclinaison sur la base de capacités (25),
▪ cependant que la base (24) est configurée comme une carte électronique PCB (10) comprenant des pistes de circuit conductrices (10t) et du matériau de base isolant (10i) et les électrodes inférieures (12) sont formées par les pistes de circuit (10t) de la carte PCB (10) sous le dôme (14),
cependant que
▪ la cavité (20) et le fluide (21) sont configurés de telle manière que la bulle (22) touche un dessus du dôme (14) et la base (14),
**caractérisé en ce que**
▪ les électrodes inférieures (12) sont couvertes par une couche (17) de matériau entre les électrodes (12) et le fluide (21), laquelle couche (17) est configurée pour fournir une surface qui est configurée pour être mouillée par le fluide (21), en particulier pour interagir avec le fluide (21) de telle manière qu'un film au moins monomoléculaire de fluide couvre la couche (17).

2. Capteur d'inclinaison à mesure capacitive (1) selon la revendication 1, **caractérisé en ce que** la couche (17) fournit une structure de surface du matériau qui est configurée pour être une structure de surface hydrophile qui crée un angle de contact inférieur à 90° en combinaison avec le fluide (21), en particulier configurée comme une couche de revêtement semblable à une éponge (17).

3. Capteur d'inclinaison à mesure capacitive (1) selon au moins l'une des revendications 1 ou 2, **caractérisé en ce que** la couche (17) à la base (24) est une couche d'isolation de la carte PCB (10), en particulier formée comme une surface de matériau fibres de verre/époxy à l'intérieur de la cavité (20), cependant que les électrodes inférieures (12) sont formées par les pistes de circuit en dessous de la couche d'isolation, en particulier cependant que la carte PCB (10) est une carte PCB-FR4 et ladite couche d'isolation est une couche d'isolation FR4 ultrapériphérique extérieure de la carte PCB (10).

4. Capteur d'inclinaison à mesure capacitive (1) selon au moins l'une des revendications 1 ou 2, **caractérisé en ce que** la couche (17) est configurée comme un revêtement de surface conductrice appliqué aux électrodes qui diffère du cuivre, en particulier qui fournit une surface anti-adhérente vers l'intérieur de la cavité (20).

5. Capteur d'inclinaison à mesure capacitive (1) selon la revendication 4, **caractérisé en ce que** la couche (17) est configurée comme une couche chromée noire.

6. Capteur d'inclinaison à mesure capacitive (1) selon la revendication 1, **caractérisé en ce que** la couche (17) est formée par un panneau de verre isolant électriquement, de céramique ou de plastique au-dessus des électrodes inférieures (12).

7. Capteur d'inclinaison à mesure capacitive (1) selon l'une quelconque des revendications 1 à 6, **caractérisé en ce que** le dôme (14) et la base (24), de préférence substantiellement une surface intérieure entière de la cavité (20), est couverte par la couche (17).

8. Capteur d'inclinaison à mesure capacitive (1) selon au moins l'une des revendications 1 à 7, **caractérisé en ce que** le dôme (14) est un dôme métallique ou un dôme en plastique métallisé avec son cintrage intérieur (23) revêtu d'une même couche que les électrodes inférieures (12), de préférence cependant que le dôme (14) est collé ou soudé sur la circonférence à la carte PCB (10), en particulier cependant que le dôme (14) est configuré à symétrie de rotation.

9. Capteur d'inclinaison à mesure capacitive (1) selon au moins l'une des revendications 1 à 8, **caractérisé en ce qu'**une forme du dôme (14) est configurée avec un cintrage qui s'atténue vers sensiblement une hauteur zéro au-dessus d'une base sensiblement plate (24) sur sa circonférence extérieure, en particulier cependant que la forme du dôme est configurée avec une forme de courbure de cintrage configurée pour créer une forme de bulle dépendant de l'inclinaison et une position dans le dôme qui est extrêmement sensible à l'inclinaison à une inclinaison d'approximativement l'orientation de niveau et dont la sensibilité à l'inclinaison diminue avec une déviation de l'orientation de niveau, de préférence avec une diminution sensiblement linéaire de la sensibilité sur une déviation d'angle d'inclinaison du niveau, de préférence avec un cintrage sensiblement plat à un centre de la forme et une courbure croissante vers une circonférence extérieure du dôme (14).

10. Capteur d'inclinaison à mesure capacitive (1) selon au moins l'une des revendications 1 à 9, **caractérisé en ce que** la cavité (20) comprend un trou (19), en particulier un trou de préférence central dans le dôme (14) ou dans la carte PCB (10), configuré pour remplir le fluide (21) dans le dôme (14), lequel trou est fermé par un bouchon inséré dans le trou (19) qui est configuré pour se terminer sensiblement plat avec la surface intérieure de la cavité (20), de préférence cependant qu'au moins une pointe intérieure du bouchon est couverte par la couche (17).

11. Capteur d'inclinaison à mesure capacitive (1) selon au moins l'une des revendications 1 à 10, **caractérisé en ce que** les capacités (25) sont dérivés comme valeurs de capacité absolue et/ou cependant que l'unité d'évaluation (11) est configurée pour dériver une valeur de température sur la base de ces valeurs absolues de capacité (25), en particulier cependant que l'unité d'évaluation (11) est configurée pour dériver l'information d'inclinaison sur la base des capacités (25) avec cette température comme paramètre pour compenser des dérives de température de la valeur d'inclinaison.

12. Capteur d'inclinaison à mesure capacitive (1) selon au moins l'une des revendications 1 à 11, **caractérisé en ce que** la bulle (22) est configurée pour occuper 30% à 70% d'un volume formé par la cavité (20), de préférence au moins 50% de la cavité (20), en particulier cependant que le fluide (21) est configuré comme une huile de silicone, un fluorocarbure ou un hydrocarbure de viscosité, tension de surface et/ou d'angle de mouillage définis, de préférence cependant que la fluide est une huile de silicone d'une viscosité inférieure à 10 cStokes, de préférence d'environ ou inférieure à 1 cStokes, de préférence avec une constance diélectrique de l'ordre de εᵣ ≈ 1.5 à 40.

13. Capteur d'inclinaison à mesure capacitive (1) selon au moins l'une des revendications 1 à 12, **caractérisé en ce que** l'unité d'évaluation (11) est fournie et configurée pour commander un déplacement du capteur d'inclinaison (1) avant la dérivation de l'information d'inclinaison, en particulier un basculement et/ou un déplacement vibrant, en particulier avec une inclinaison d'environ 5 à 10° sur une période d'au moins quelques secondes, de préférence en deux axes.

14. Procédé d'initialisation d'un capteur d'inclinaison à mesure capacitive (1) selon l'une des revendications 1 à 13 pour réduire un temps de dérive de lectures d'inclinaison du capteur (1), avec
▪ un réglage d'un instrument (49) comprenant le capteur d'inclinaison à mesure capacitive (1) à un endroit et à une orientation d'instrument souhaités,
▪ un déplacement de préférence motorisé d'une portion de l'instrument (49) qui comprend le capteur d'inclinaison à mesure capacitive (1), lequel déplacement est configuré pour faire pivoter la bulle de gaz (22) dans la cavité (20) par rapport à l'orientation d'instrument souhaitée,
▪ un retour à 'orientation d'instrument souhaitée et
▪ une dérivation des lectures d'inclinaison.

15. Instrument de levée géodésique (49) comprenant un capteur d'inclinaison à mesure capacitive (1) selon l'une quelconque des revendications 1 à 13, en particulier un théodolite, un tachymètre, une station totale, un scanner laser, un suiveur laser, un laser rotatif, un pointeur laser, une unité de marquage laser, en particulier cependant qu'un déplacement selon la revendication 13 est établi pendant une routine d'initialisation par un axe de pointage motorisé de l'instrument.
